# EUROPEAN PATENT APPLICATION

(11) **EP 4 782 397 A1**
(43) Date of publication of application: **29.07.2026**
(21) Application number: 26153388.9
(22) Date of filing: 22.01.2026
(51) Int. Cl.: C01B 25/45, H01M 4/58

(54) **LITHIUM IRON PHOSPHATE PRECURSOR, LITHIUM IRON PHOSPHATE CATHODE MATERIAL WITH HIGH COMPACTION DENSITY, AND MANUFACTURING METHOD THEREOF**

(30) Priority: 22.01.2025 US 202563747989 P
(71) Applicant: Advanced Lithium Electrochemistry Co., Ltd., Taoyuan City 330 (TW)
(72) Inventor: LIN, SHU YU, 330467 Taoyuan City (TW); HUANG, CHEN YI, 330467 Taoyuan City (TW)
(74) Representative: Cabinet Chaillot

(57) **Abstract**

A lithium iron phosphate precursor, the preparation of which includes: uniformly mixing a metal oxide, a dispersant, a carbon source, a lithium source, and a first lithium iron phosphate in an aqueous solution, followed by a first grinding to obtain a first precursor with a median particle diameter (D50) of 0.35 to 0.39 µm; then adding a second lithium iron phosphate to the first precursor, uniformly mixing, and performing a second grinding to obtain the lithium iron phosphate precursor with a median particle diameter (D50) of 0.35 to 0.39 µm. The overall process provided by the present invention is simple and does not require repeated replacement of materials, reaction environments, or equipment, reflecting the advantages of a continuous process. In addition, the lithium iron phosphate battery cathode material produced from this precursor exhibits high compaction density characteristics.

## Description

### FIELD OF INVENTION

A method for manufacturing a lithium iron phosphate battery material, and more particularly to a lithium iron phosphate precursor, a lithium iron phosphate cathode material with high compaction density, and a manufacturing method for the same.

### BACKGROUND OF THE INVENTION

With the advancement of technology and the increasing demand for mobile devices, the demand for using secondary batteries as the energy source for mobile devices has also risen sharply. Among them, lithium batteries possess the greatest development potential due to their many advantages, including high specific capacity and high energy density, being non-polluting, having excellent charge-discharge cycling characteristics, and exhibiting no memory effect.

One of the indicators used to evaluate the performance of lithium batteries is the specific capacity (mAh/g), and the relevant factors are associated with the selection and improvement of lithium iron phosphate materials. The more commonly known and widely commercialized materials are lithium iron phosphate materials having a spinel structure or an olivine structure. Accordingly, most developments in the related field have been directed toward improving the structure or material properties of lithium iron phosphate materials in pursuit of further breakthroughs.

However, the abovementioned development directions often result in lithium iron phosphate materials having an overall complex and time-consuming manufacturing process. In addition, the compaction density of lithium iron phosphate materials is also a major factor affecting the energy density and charge-discharge cycling characteristics of lithium batteries. Merely improving the structure or material properties of lithium iron phosphate cannot meet the current demands for rapid charge/discharge and long cycle life. Therefore, it is necessary to develop a lithium iron phosphate material with high compaction density that allows rapid charge/discharge and long lifespan.

### SUMMARY OF THE INVENTION

To develop a lithium iron phosphate material with high compaction density, fast charge/discharge capability, and long cycle life, the present invention provides a method for producing a high compaction density lithium iron phosphate material, comprising steps of: uniformly mixing a metal oxide, a dispersant, a carbon source, a lithium source, and a first lithium iron phosphate in an aqueous solution, followed by a first grinding to obtain a first precursor with a median particle diameter (D50) of 0.35 to 0.39 µm, wherein the added amount of the metal oxide is 0.5 to 1 M, the added amount of the dispersant is 0.1 to 0.5 M, the added amount of the carbon source is 13 to 15.5 M, the added amount of the lithium source is 6 to 7 M, and the added amount of the first lithium iron phosphate is 5.5 to 7 M; and adding a second lithium iron phosphate to the first precursor, uniformly mixing, and performing a second grinding to obtain the lithium iron phosphate precursor with a median particle diameter (D50) of 0.35 to 0.39 µm, wherein the added amount of the second lithium iron phosphate is 1.5 to 3 M.

Wherein, the first iron phosphate and the second iron phosphate are different materials.

Wherein, the first iron phosphate is spherical and the second iron phosphate is non-spherical.

Wherein, the metal oxide comprises titanium dioxide (TiO₂), vanadium pentoxide (V₂O₅), niobium pentoxide (Nb₂O₅), magnesium oxide (MgO), or a combination thereof.

Wherein, the dispersant comprises a non-ionic surfactant.

Wherein, the carbon source comprises a sugar or a polymer material, and the sugar comprises a monosaccharide, disaccharide, or polysaccharide; and the polymer material is polyvinylpyrrolidone (PVP).

Wherein, the carbon source is glucose.

Wherein, the lithium source is lithium metal or a lithium-containing compound.

Wherein, a solid content of the first precursor is 30 to 50 wt%.

The invention further provides a method for producing a lithium iron phosphate battery cathode material with high compaction density, wherein after the second grinding, the lithium iron phosphate precursor is subjected to drying and sintering to obtain the lithium iron phosphate battery cathode material.

Wherein, the compaction density of the lithium iron phosphate battery cathode material is greater than 2.5 g/cm³.

Wherein, during sintering, the lithium iron phosphate precursor is placed in a high-temperature furnace and heated to 150 to 300°C, preferably to 200°C, for a first sintering stage of 1 hour; then heated at a rate of 2 to 10°C/min to 350 to 600°C, preferably to 400°C, for a second sintering stage of 1 hour; and finally heated at a rate of 2 to 10°C/min to 700 to 900°C, preferably to 810°C, for a third sintering stage of 10 hours.

The overall process provided by the present invention is simple and does not require repeated replacement of materials, reaction environments, or equipment, thereby embodying the advantages of a continuous process. In addition, the lithium iron phosphate precursor and the lithium iron phosphate battery cathode material produced by the above method exhibit high compaction density characteristics.

### BRIEF DESCRIPTION OF THE DRAWINGS

The present invention will be further illustrated by way of exemplary embodiments, which are described in detail with reference to the accompanying drawings. These embodiments are not intended to be limiting. In the embodiments, the same reference numerals indicate the same structures, wherein:
FIG. 1 is a schematic flow diagram of the manufacturing method in accordance with the present invention.
FIG. 2A is a particle size distribution diagram of the first embodiment in accordance with the present invention before a second grinding.
FIG. 2B is a particle size distribution diagram of the first embodiment in accordance with the present invention after a second grinding.
FIG. 3 is a particle size distribution diagram of the first comparative example of the present invention at each step.

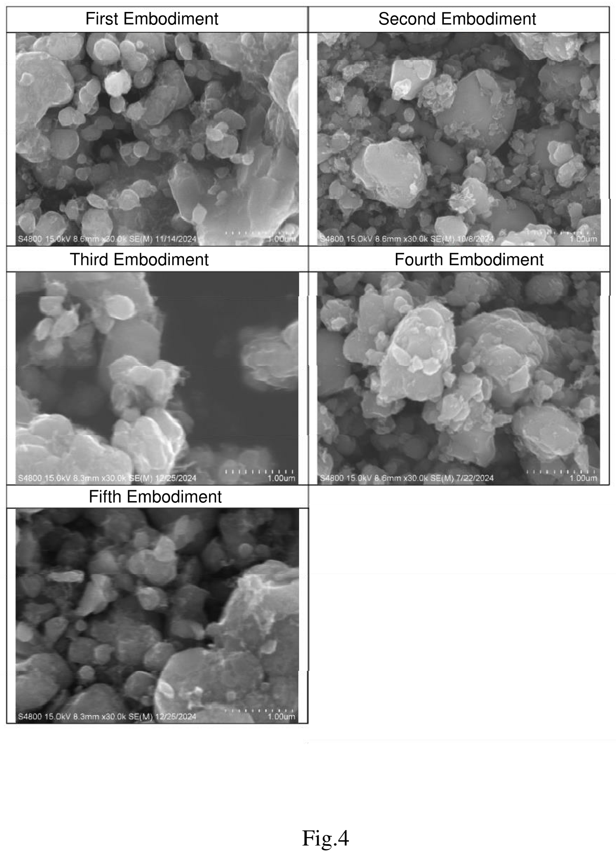

FIG. 4 shows the scanning electron microscope images of the first to the fifth embodiments in accordance with the present invention.
FIG. 5 shows the scanning electron microscope images of the first to the fifth comparative examples of the present invention.

### DETAILED DESCRIPTION OF THE PREFERRED EMBODIMENTS

To more clearly illustrate the technical solutions of the embodiments of the present invention, the embodiments and the accompanying drawings required therein are described and introduced below. It is understood that the drawings referenced in the following description merely represent certain exemplary or illustrative embodiments that can specifically and clearly explain the present invention. Any modifications or reasonable variations made by those of ordinary skill in the art based on these drawings to apply the present invention to other similar situations shall be included within the scope of the present invention. Unless otherwise apparent from the context or expressly stated, the same reference numerals in the drawings denote the same structures or operations.

As shown in the present invention and the claims, unless the context clearly indicates otherwise, the terms "a," "an," "one," "a type of," and "the" are not intended to be limiting to the singular and may likewise include the plural. In general, the terms "include" and "comprise" indicate the inclusion of the steps or elements explicitly identified, but such steps or elements are not an exclusive listing, and the method or apparatus may also include other steps or elements.

Flowcharts are used in the present invention to illustrate steps executed in the method embodiments in accordance with the invention and the operations performed therein. It should be understood that the steps included in the method are not necessarily carried out in the exact order presented. On the contrary, the steps may be performed in reverse order or concurrently. In addition, other steps may be added to the processes, or one or more steps may be removed from the processes.

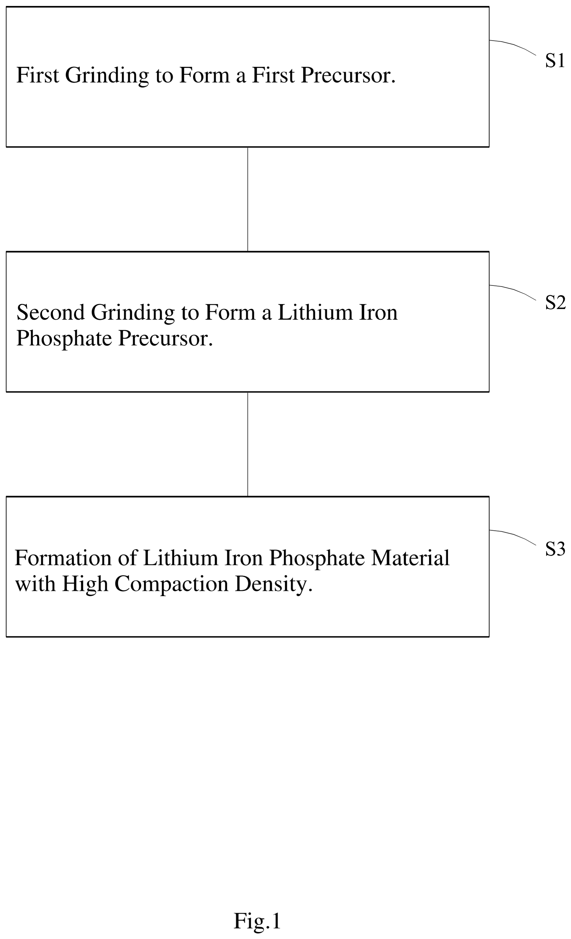

Method for preparing lithium iron phosphate cathode material with high compaction density in accordance with the present invention will be described in detail below. Wherein, the present invention prepares a lithium iron phosphate material, which is then subjected to sieving, crushing, and magnetic separation processes, thereby obtaining the lithium iron phosphate cathode material. As shown in FIG. 1, the steps include:

Step S1, first grinding to form a first precursor: A metal oxide, a dispersant, a carbon source, a lithium source, and a first iron phosphate are uniformly mixed in an aqueous solution and subjected to a first grinding, thereby obtaining the first precursor having a median particle diameter (D50) ranging from 0.35 to 0.39 µm. The aqueous solution may, for example, be deionized water.

The metal oxide may be titanium dioxide (TiO₂), vanadium pentoxide (V₂O₅), niobium pentoxide (Nb₂O₅), magnesium oxide (MgO), or a combination thereof.

The dispersant includes a nonionic surfactant. Preferably, the dispersant includes polyethylene glycol (PEG).

The carbon source is a saccharide or a polymeric material. The saccharide includes a monosaccharide, disaccharide, or polysaccharide, and the polymeric material is polyvinylpyrrolidone (PVP).

Preferably, the carbon source is glucose. More preferably, the glucose is anhydrous glucose.

The lithium source is lithium metal or a lithium-containing compound. Preferably, the lithium source is lithium carbonate or lithium hydroxide (LiOH).

The first iron phosphate may have an approximately spherical morphology, and the solid content of the first precursor ranges from 30 to 50 wt%. More preferably, the solid content of the first precursor is 40 wt%.

Wherein, the present invention is directed to producing 1,000 kilograms of the lithium iron phosphate material, and the following metal oxide, dispersant, carbon source, lithium source, and first iron phosphate are accordingly added. The amount of the metal oxide added ranges from 0.5 to 1 M (M: molar mass, in g/mol); the amount of the dispersant added ranges from 0.1 to 0.5 M; the amount of the carbon source added ranges from 13 to 15.5 M; the amount of the lithium source added ranges from 6 to 7 M; and the amount of the first iron phosphate added ranges from 5.5 to 7 M. In other words, the notation "M", means the mass to be added of the corresponding component to get to 1 mol of the desired lithium iron phosphate material.

The metal oxide, the dispersant, the carbon source, the lithium source, and the first iron phosphate are at first added to an aqueous solution and uniformly mixed, followed by a first grinding.

Step S2, second grinding to form a lithium iron phosphate precursor: A second iron phosphate is added to the first precursor and uniformly mixed, followed by a second grinding to obtain the lithium iron phosphate precursor having a median particle diameter (D50) ranging from 0.35 to 0.39 µm.

The first iron phosphate and the second iron phosphate may have the same or different morphologies. Preferably, the second iron phosphate has a non-spherical structure. The initial median particle diameter (D50) of the first iron phosphate is greater than that of the second iron phosphate. For example, the initial median particle diameter (D50) of the first iron phosphate ranges from 5 to 7 µm, with a surface area (BET) ranging from 4 to 15 m²/g, preferably from 7 to 10 m²/g. The initial median particle diameter (D50) of the second iron phosphate ranges from 4 to 6 µm, with a surface area ranging from 4 to 15 m²/g, preferably from 5 to 8 m²/g.

When the second iron phosphate has a non-spherical morphology, it may, for example, have a flake morphology, and the amount of the second iron phosphate added ranges from 1.5 to 3 M.

The second iron phosphate is added to the first precursor and uniformly mixed for 30 to 60 minutes, followed by a second grinding.

Step S3, forming the lithium iron phosphate material with high compaction density: The lithium iron phosphate precursor is subjected to drying and sintering processes to obtain the lithium iron phosphate material with high compaction density.

Furthermore, after Step S3, depending on the requirements, sieving, crushing, and magnetic separation processes may be performed after sintering to obtain lithium iron phosphate cathode materials with different particle sizes according to the specifications required by the customer.

The drying is not specifically limited to any particular method and may be carried out within a temperature range of 20 to 250°C. In some embodiments, spray drying may be employed, in which the lithium iron phosphate precursor is heated to evaporate its moisture content, thereby converting it into a dried solid state. The time required for spray drying is positively correlated with the amount (weight) of the lithium iron phosphate precursor to be dried.

The sintering may be performed in air or under a reducing environment of an inert gas. The inert gas may be nitrogen, hydrogen, argon, or a mixed gas containing one or more of the foregoing gases.

In this embodiment, a multi-stage heating process is employed for sintering. The lithium iron phosphate precursor is placed in a high-temperature furnace and heated to 150 to 300°C, preferably to 200°C, for a first-stage sintering treatment for 1 to 2 hours. The temperature is then increased at a heating rate of 2 to 10°C/min until the high-temperature furnace reaches 350 to 600°C, preferably 400°C, for a second-stage sintering treatment for 1 to 2 hours. Finally, the temperature is further increased at a heating rate of 2 to 10°C/min until the high-temperature furnace reaches 700 to 900°C, preferably 810°C, for a third-stage sintering treatment for 8 to 10 hours.

The effects of the manufacturing method in accordance with the present disclosure will be described in detail below through embodiments and comparative examples.

### First Embodiment

0.7 M of titanium dioxide (TiO₂), 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the second iron phosphate was added for the second grinding. Finally, after drying and sintering, the lithium iron phosphate material of the first embodiment was obtained.

### Second Embodiment

0.7 M of vanadium pentoxide (V₂O₅), 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the second iron phosphate was added for the second grinding. Finally, after drying and sintering, the lithium iron phosphate material of the second embodiment was obtained.

### Third Embodiment

0.7 M of niobium pentoxide (Nb₂O₅), 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the second iron phosphate was added for the second grinding. Finally, after drying and sintering, the lithium iron phosphate material of the third embodiment was obtained.

### Fourth Embodiment

0.35 M of vanadium pentoxide (V₂O₅) and 0.35 M of titanium dioxide (TiO₂) as two or more metal oxides, 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the second iron phosphate was added for the second grinding. Finally, after drying and sintering, the lithium iron phosphate material of the fourth embodiment was obtained.

### Fifth Embodiment

0.35 M of vanadium pentoxide (V₂O₅) and 0.35 M of niobium pentoxide (Nb₂O₅), 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the second iron phosphate was added for the second grinding. Finally, after drying and sintering, the lithium iron phosphate material of the fifth embodiment was obtained.

### First Comparative Example

0.3 M of polyethylene glycol (PEG) and 3.8 M of the first iron phosphate were added to the aqueous solution, uniformly mixed, and subjected to the first grinding to obtain the first precursor. Next, 0.7 M of titanium dioxide (TiO₂), 14.8 M of anhydrous glucose, 6.77 M of lithium carbonate, and 2.54 M of the second iron phosphate were added for the second grinding. Finally, after drying and sintering, the lithium iron phosphate material of the first comparative example was obtained. The difference between the first comparative example and the first embodiment lies in that the metal oxide (titanium dioxide), the carbon source (anhydrous glucose), and the lithium source (lithium carbonate) are added together with the second iron phosphate only during the second grinding.

### Second Comparative Example

0.7 M of titanium dioxide (TiO₂), 0.3 M of polyethylene glycol (PEG), 14.8 M of anhydrous glucose, 6.77 M of lithium carbonate, and 3.8 M of the first iron phosphate were added to the aqueous solution, uniformly mixed, and subjected to the first grinding to obtain the first precursor having a median particle diameter (D50) ranging from 0.35 to 0.39 µm. Next, 2.54 M of the first iron phosphate was added for the second grinding. Finally, after drying and sintering, the lithium iron phosphate material of the second comparative example was obtained. In this case, the first iron phosphate is the same as the second iron phosphate, and both have an approximately spherical morphology.

### Third Comparative Example

0.7 M of titanium dioxide (TiO₂), 0.3 M of polyethylene glycol (PEG), 14.8 M of anhydrous glucose, 6.77 M of lithium carbonate, 3.8 M of the first iron phosphate, and 2.54 M of the second iron phosphate were added to the aqueous solution, uniformly mixed, and subjected to only a single grinding. That is, all the raw materials were added together and ground directly to obtain the lithium iron phosphate precursor having a median particle diameter (D50) ranging from 0.35 to 0.39 µm. Finally, after drying and sintering, the lithium iron phosphate material of the third comparative example was obtained.

Furthermore, the lithium iron phosphate materials prepared in the first embodiment and the first to the third comparative examples were subjected to sieving, crushing, and magnetic separation to produce the lithium iron phosphate cathode materials.

TABLES 1 and 2 are material property comparison tables of the first precursor, the lithium iron phosphate precursor, and the lithium iron phosphate cathode material at each stage for the first embodiment and the first to the third comparative examples. In TABLE 1, the median particle diameter (D50) of the first precursor, the median particle diameter (D50) of the lithium iron phosphate precursor, and the median particle diameter (D50) of the lithium iron phosphate material are measured, respectively. As shown in the table, in the first embodiment and the first to the third comparative examples, the median particle diameter (D50) of each lithium iron phosphate precursor is controlled between 0.35 and 0.39 µm to proceed with the subsequent manufacturing steps.

**TABLE 1**

| | D50(µm) of the First Precursor | D50(µm) of the Lithium Iron Phosphate Precursor | D50(µm) of the Lithium Iron Phosphate Material |
|---|---|---|---|
| First Embodiment | 0.367 | 0.372 | 27.08 |
| Second Embodiment | 0.350 | 0.376 | 28.88 |
| Third Embodiment | 0.360 | 0.363 | 28.64 |
| Fourth Embodiment | 0.368 | 0.378 | 27.45 |
| Fifth Embodiment | 0.366 | 0.370 | 29.63 |
| First Comparative Example | 0.5 | 0.36 | -- |
| Second Comparative Example | 0.36 | 0.36 | 30.26 |
| Third Comparative Example | -- | 0.36 | 27.76 |

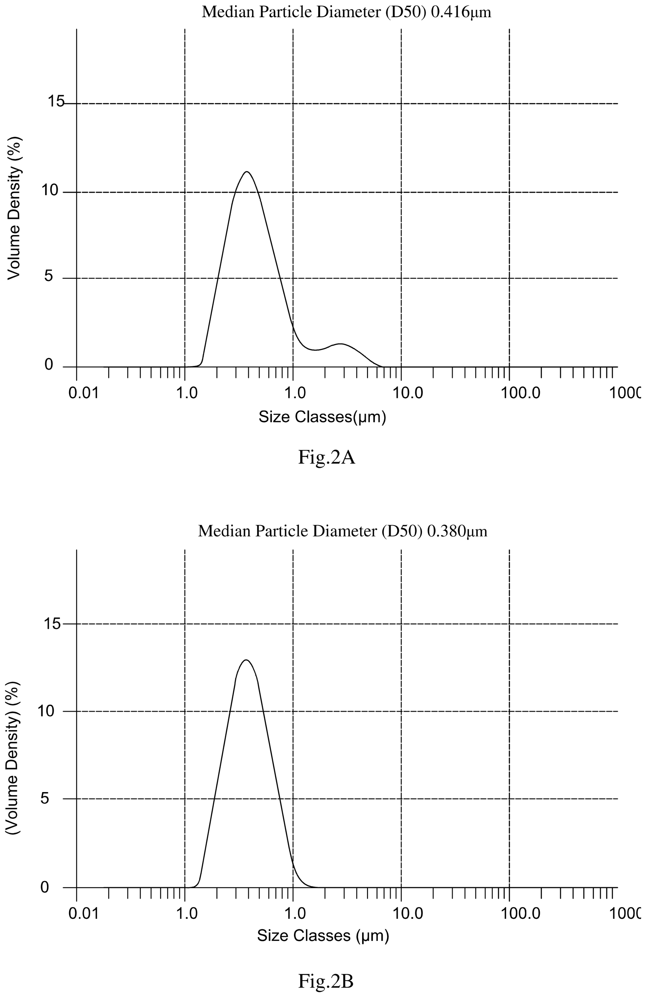

With reference to FIGS. 2A and 2B, although the final median particle diameters (D50) after the second grinding for the first embodiment and the first to the fourth comparative examples are controlled between 0.35 and 0.39 µm, the changes in particle size distribution exhibited during the second grinding in the first embodiment and the first to the third comparative examples show significant differences. Real-time monitoring of particle size distribution was conducted during the process of adding different iron phosphates and their respective addition sequences to the first precursor before and after the second grinding. A particle size analyzer was used, in which a laser light source passes through the sample to be measured (e.g., the samples of the first embodiment and the first to the third comparative examples). The samples generate scattered light signals of different intensities at different angles depending on the particle sizes. By measuring the scattered light intensity at various angles and analyzing the data using Mie scattering theory, the scattering spectrum of the sample can be obtained. From this, the particle size distribution range of the sample is calculated, and the median particle diameter (D50) within this distribution range is determined. The particle size of the sample is expressed as the volume-equivalent sphere diameter.

FIG. 2A shows the particle size distribution before the second grinding. Notably, during the preparation of the first embodiment in Step S2, a secondary peak A1 appears on the right side of the main peak A in the figure, and the overall median particle diameter (D50) is 0.416 µm. The particle size distribution of the lithium iron phosphate material after the second grinding (FIG. 2B) shows that, in addition to maintaining the median particle diameter (D50) within the desired range (0.380 µm), the main peak A in the particle size distribution remains unchanged, and the corresponding volume distribution (V_{D}) has increased.

In the particle size distribution graph, the horizontal axis represents particle size (Size Classes) in µm, and the vertical axis represents volume density (Volume Density) in %.

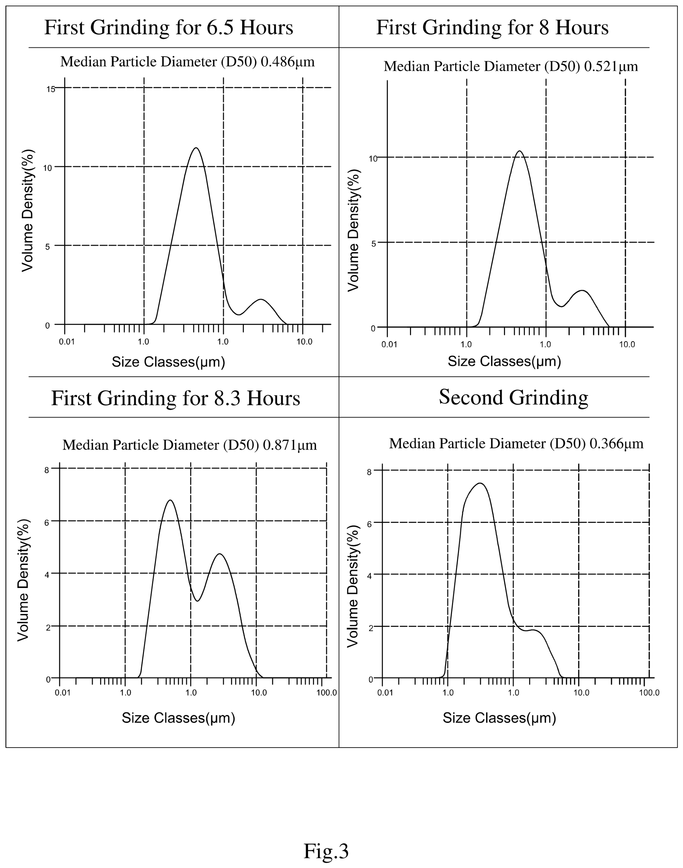

However, FIG. 3 shows the particle size distributions of the first comparative example after the first grinding (with only PEG and the first iron phosphate added) at 6.5 hours, 8 hours, and 8.3 hours, as well as after the second grinding of the first comparative example. It can be observed that when only PEG and the first iron phosphate are added for the first grinding, the median particle diameter (D50) reaches approximately 0.5 µm, and the first precursor of the first comparative example begins to exhibit agglomeration of slurry, causing the median particle diameter (D50) of the first precursor to gradually increase (as shown in the particle size distribution after 8.3 hours of the first grinding). Although lithium carbonate, glucose, and titanium dioxide are subsequently added and the second grinding in Step S2 is performed, the slurry agglomeration phenomenon disappears, making the lithium iron phosphate material of the first comparative example to maintain the median particle diameter (D50) within the desired range (0.380 µm). Notably, the main peak A of the first comparative example undergoes a change in particle size distribution after the second grinding, and the corresponding volume distribution (V_{D}) decreases. This indicates that adjusting the addition sequence of lithium carbonate, glucose, and titanium dioxide can substantially affect the material properties of the lithium iron phosphate during its production.

TABLE 2 shows the measured specific surface area (BET), carbon content (C%), and a compaction density (g/cm³) of the lithium iron phosphate materials for the first embodiment and the first to the third comparative examples after preparation as cathode materials, as well as the compaction density measured after sieving, crushing, and magnetic separation. The specific surface area is measured based on the adsorption characteristics of a gas on the solid surface, which can be classified as chemisorption or physisorption. In this experiment, physisorption is primarily used. The sample to be measured serves as the adsorbent, and the gas molecules serve as the adsorptive. Under controlled pressure and low-temperature conditions, physical adsorption occurs on the surface of the adsorbent. By measuring the adsorption pressure and the amount of gas adsorbed at equilibrium, the specific surface area of the sample can be determined. The carbon content is measured using an elemental analyzer. The sample is combusted instantaneously in an oxidizing environment to convert the material into gases such as O₂, NOₓ, CO₂, H₂O, SO₂, and SO₃. After subsequent reduction, these gases are converted into N₂, CO, H₂O, and SO₂. The amounts of N₂, CO, H₂O, and SO₂ are then measured to determine the weight percentages of nitrogen (N), carbon (C), hydrogen (H), and sulfur (S), thus providing the carbon content of the sample. The compaction density is measured by filling 1.0 to 1.01 g of the sample into a mold and applying a pressure of 2.4 tons. The thickness of the compressed sample is then measured, and the compaction density is calculated based on this measurement.

The results show that the lithium iron phosphate cathode materials prepared by the manufacturing methods in accordance with the present invention (the first to the fifth embodiments) exhibit a compaction density of up to 2.55 g/cm³ or higher. In the first comparative example, due to agglomeration occurring during the first grinding, the resulting lithium iron phosphate cathode material has a relatively lower compaction density. Similarly, the lithium iron phosphate cathode materials prepared in the second and the third comparative examples also exhibit lower compaction densities. This indicates that the selection of the first and second iron phosphate materials, as well as the timing of addition of the metal oxide, carbon source, and lithium source, can have a certain degree of influence on the compaction density characteristics.

**TABLE 2**

| | Specific Surface Area (BET) | Carbon Content (C%) | The Compaction Density of the Lithium Iron Phosphate Cathode Material (g/cm³) |
|---|---|---|---|
| First Embodiment | 12.18 | 1.22 | 2.60 |
| Second Embodiment | 12.16 | 1.27 | 2.56 |
| Third Embodiment | 14.09 | 1.24 | 2.59 |
| Fourth Embodiment | 12.59 | 1.25 | 2.58 |
| Fifth Embodiment | 13.67 | 1.24 | 2.59 |
| First Comparative Example | 16.27 | 0.97 | 2.24 |
| Second Comparative Example | 13.29 | 1.35 | 2.26 |
| Third Comparative Example | 11.63 | 1.14 | 2.47 |

Further, by confirming the surface characteristics of the lithium iron phosphate materials of the first to the fifth embodiments and the first to the third comparative examples after fabrication through a scanning electron microscope (SEM), it can be observed that the SEM images of the first to the fifth embodiments exhibit an apparent distribution of large and small particles, in which the ratio between the small particles and the large particles ranges from 1:9 to 3:7. It is also due to such particle-size distribution characteristics of the first to the fifth embodiments that the lithium iron phosphate cathode material can exhibit a high compaction density.

However, the lithium iron phosphate material of the first comparative example exhibits agglomerated lumps due to agglomeration of the slurry. The SEM images of the second and the third comparative examples show a high distribution of small particles, with a noticeably lower proportion of large particles, in which the ratio between the small particles and the large particles ranges from 7:3 to 3:1. This reflects the correlation between the material selection of the first iron phosphate and the second iron phosphate, as well as the addition timing of the metal oxide, the carbon source, and the lithium source, with respect to the particle-size distribution of the lithium iron phosphate material.

Furthermore, after performing electrochemical performance testing on the lithium iron phosphate cathode material prepared in the first embodiment, the 0.1 C charge/discharge capacity (0.1CD) was 159 mAh/g, and the 2 C charge/discharge capacity (2CD) was 125 mAh/g. This confirms that the lithium iron phosphate cathode material prepared in the first embodiment can simultaneously exhibit a high compaction density while maintaining desirable electrochemical performance (charge/discharge capability).

The present invention further provides the fourth comparative example, for comparison, in which the first precursor and the second iron phosphate are each first subjected to a single grinding step to achieve different particle sizes, and then mixed. The resulting mixture is subsequently subjected to the second grinding to obtain the lithium iron phosphate precursor with a median particle diameter (D50) in the range of 0.35 to 0.39 µm, which is then used to produce the lithium iron phosphate cathode material of the fourth comparative example. It is noteworthy that the difference between this comparative example and the prior art lies in the fact that, in conventional methods, the first iron phosphate and the second iron phosphate are each added with various raw materials and individually ground to separately form a first precursor and a second precursor with different particle sizes. In this fourth comparative example, only the second iron phosphate is ground with the required addition of aqueous solution or dispersant.

In the fourth comparative example, the first precursor has a median particle diameter (D50) of 1.0 µm (volume fraction 40%), and the second iron phosphate has a median particle diameter (D50) of 0.4 µm (volume fraction 60%).

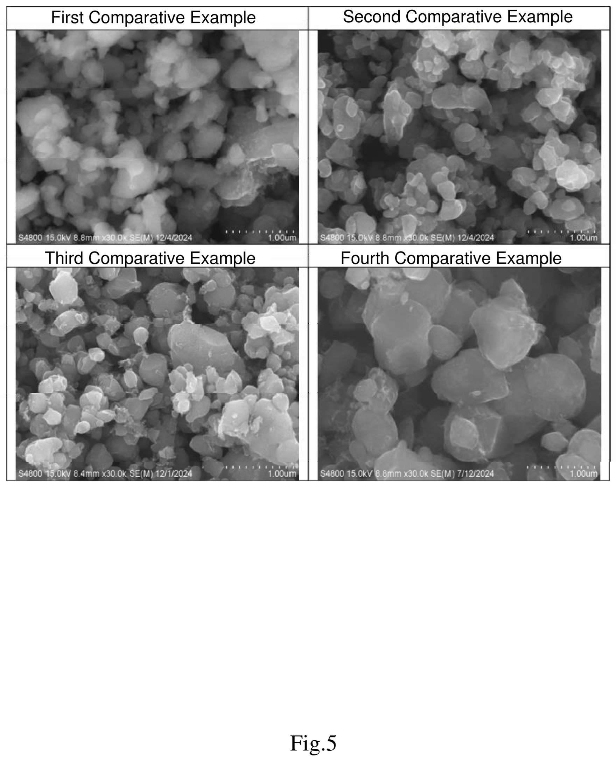

TABLE 3 compares the material properties of the lithium iron phosphate cathode materials of the first embodiment and the fourth comparative example. With reference to FIG. 5, it can be observed that the lithium iron phosphate cathode material of the fourth comparative example consists entirely of large particles in the SEM images, without an apparent difference in particle sizes. Taken together, it can be understood that, in addition to the requirement for a distribution of large and small particles, the order of material addition and the manufacturing method during the preparation process also have a direct impact on the material properties of the lithium iron phosphate cathode material.

**TABLE 3**

| | Specific Surface Area (BET) | Carbon Content (C%) | The Compaction Density of the Lithium Iron Phosphate Cathode Material (g/cm³) |
|---|---|---|---|
| First Embodiment | 12.18 | 1.22 | 2.60 |
| Fourth Comparative Example | 11.33 | 1.19 | 2.36 |

From the foregoing, it can be seen that the methods for preparing the lithium iron phosphate material and the lithium iron phosphate cathode material provided by the present invention include the following advantages:
1. The overall preparation is simple, and no repeated replacement of materials, reaction environments, or equipment is required between Steps S1 to S3, embodying the advantages of a continuous process.
2. The lithium iron phosphate material prepared through Steps S1 to S3 can exhibit a high compaction density while maintaining good electrochemical performance, thereby improving conductivity and energy density per unit volume.

## Claims

1. A method for preparing a lithium iron phosphate precursor, comprising steps of:
mixing a metal oxide, a dispersant, a carbon source, a lithium source, and a first iron phosphate in an aqueous solution and performing a first grinding to obtain a first precursor having a median particle diameter (D50) of 0.35 to 0.39 µm; and
adding a second iron phosphate to the first precursor, uniformly mixing, and performing a second grinding to obtain the lithium iron phosphate precursor having a median particle diameter (D50) of 0.35 to 0.39 µm.

2. The method for preparing the lithium iron phosphate precursor according to claim 1, wherein the added amount of the metal oxide is 0.5 to 1 M; the added amount of the dispersant is 0.1 to 0.5 M; the added amount of the carbon source is 13 to 15.5 M; the added amount of the lithium source is 6 to 7 M; the added amount of the first iron phosphate is 5.5 to 7 M; and the added amount of the second iron phosphate is 1.5 to 3 M.

3. The method for preparing the lithium iron phosphate precursor according to claim 1, wherein the first iron phosphate and the second iron phosphate are different materials.

4. The method for preparing the lithium iron phosphate precursor according to claim 2, wherein the first iron phosphate is spherical and the second iron phosphate is non-spherical; the metal oxide comprises titanium dioxide (TiO₂), vanadium pentoxide (V₂O₅), niobium pentoxide (Nb₂O₅), magnesium oxide (MgO), or a combination thereof; the dispersant comprises a non-ionic surfactant; the carbon source comprises a sugar or a polymer material, wherein the sugar comprises a monosaccharide, disaccharide, or polysaccharide; the polymer material is polyvinylpyrrolidone (PVP); and the lithium source is lithium metal or a lithium-containing compound.

5. The method for preparing the lithium iron phosphate precursor according to claim 4, wherein the carbon source is glucose; and a solid content of the first precursor is 30 to 50 wt%.

6. A method for producing a lithium iron phosphate battery cathode material with high compaction density, comprising steps of:
uniformly mixing a metal oxide, a dispersant, a carbon source, a lithium source, and a first iron phosphate in an aqueous solution and performing a first grinding to obtain a first precursor having a median particle diameter (D50) of 0.35 to 0.39 µm, wherein the added amount of the metal oxide is 0.5 to 1 M, the added amount of the dispersant is 0.1 to 0.5 M, the added amount of the carbon source is 14 to 15.5 M, the added amount of the lithium source is 6 to 7 M, and the added amount of the first iron phosphate is 5.5 to 7 M;
uniformly mixing a second iron phosphate with the first precursor and performing a second grinding to obtain a lithium iron phosphate precursor having a median particle diameter (D50) of 0.35 to 0.39 µm, wherein the added amount of the second iron phosphate is 1.5 to 3 M; and
drying and sintering the lithium iron phosphate precursor to obtain the lithium iron phosphate battery cathode material.

7. The method for producing the lithium iron phosphate battery cathode material with high compaction density according to claim 6, wherein the compaction density of the lithium iron phosphate battery cathode material is greater than 2.5 g/cm³, the first iron phosphate is spherical, and the second iron phosphate is non-spherical.

8. The method for producing the lithium iron phosphate battery cathode material with high compaction density according to claim 7, wherein the carbon source is glucose; the solid content of the first precursor is 30 to 50 wt%; during sintering, the lithium iron phosphate precursor is placed in a high-temperature furnace and heated to 150 to 300°C, preferably to 200°C, for a first sintering stage of 1 hour; then heated at a rate of 2 to 10°C/min to 350 to 600°C, preferably to 400°C, for a second sintering stage of 1 hour; and finally heated at a rate of 2 to 10°C/min to 700 to 900°C, preferably to 810°C, for a third sintering stage of 10 hours.

9. A lithium iron phosphate precursor produced by the method for producing a lithium iron phosphate precursor according to claim 1.

10. A lithium iron phosphate battery cathode material produced by the method for producing a high compaction density lithium iron phosphate battery cathode material according to claim 6.
